# EUROPEAN PATENT SPECIFICATION

(11) **EP 3 337 607 B1**
(45) Date of publication and mention of the grant of the patent: **04.01.2023**
(21) Application number: 16837796.8
(22) Date of filing: 18.08.2016
(51) Int. Cl.: B01J 20/32, B01D 24/20, B01D 53/14, B01D 61/24, B01D 69/12, B01D 71/02

(54) **GAS PHASE STORAGE DEVICE WITH HIGH PERFORMANCE SORPTION BINDER**
GASPHASENSPEICHERVORRICHTUNG MIT HOCHLEISTUNGSFÄHIGEM SORPTIONSBINDER
DISPOSITIF DE STOCKAGE EN PHASE GAZEUSE COMPRENANT UN LIANT DE SORPTION À HAUTE PERFORMANCE

(30) Priority: 20.08.2015 US 201562207401 P
(43) Date of publication of application: 27.06.2018
(73) Proprietor: Arkema, Inc., King of Prussia, PA 19406 (US)
(72) Inventor: STABLER, Sean M., Pottstown, Pennsylvania 19464 (US); REBER, III, Roderick, Maple Glen, Pennsylvania 19002 (US)
(74) Representative: Arkema Patent
(86) International application number: PCT/US2016/047445
(87) International publication number: WO 2017/031260

(56) References cited:
- WO-A2-2014/055473
- US-A- 4 999 330
- US-A- 5 956 225
- US-A1- 2005 260 396
- US-A1- 2006 030 483
- US-B1- 6 395 190

## Description

### FIELD OF THE INVENTION

The invention relates to a gas storage article comprising high performance thermoplastic polymer binder materials for immobilizing adsorptive materials. The presence of these binders, which are fluoropolymers or polyamide binders, provides a porous solid having a high adsorbent packing density, low binder fouling of adsorbent, and maximizes the volume of gas to the volume of the storage space.

### BACKGROUND OF THE INVENTION

Adsorbed gas storage provides an advancement in the temporary storage of gaseous materials that overcome obstacles related to high pressure systems commercially used today to compress gases.

Gases such as noble gases, O₂, N₂, hydrocarbons, and other small gas molecules are used in many markets including, but not limited to, industrial, automotive, pharmaceutical, food, beverage, electronics, etc. Specific applications include concentrated medical oxygen, industrial desiccants, portable and residential liquefied petroleum gas (LPG), stranded gas flares, kerosene burners, cook stoves, compressed natural gas (CNG), and many others.

The storage and transport of said gases are typically in vessels where high pressures are used to condense or even liquefy the gas to utilize the greatest concentration safely possible with in an occupied volume. The pressurization process results in unwanted and excessive costs due to the energy and infrastructure requirements. In addition, there is a limitation in storage containment geometry to safely store and transport the gas; resulting in limitations of storage designs.

The technology to convert low bulk density sorbent powder into an immobilized higher density block using a thermoplastic binder is well known for filtration applications. It is widely believed that high surface area sorption materials formed into high density compacted structures can achieve the economic storage volume needed for gases. The use of binder materials developed takes the immobilization technology even further, providing higher packing densities and better manufacturing productivity, while maintaining the sorbents highest performance. The resulting devices made from the combination of the manufactured immobilized block by specific formulations of thermoplastic binder and adsorption media allows very high volume storage of gas per volume of device, but at a much lower pressure needed compared to liquefying and compressed gas technologies widely used today.

US 4,999,330 describes the needs and challenges for the high-density adsorbent used in ANG systems. The efficiency of the system depends on the level of surface area of the adsorbent, the density of the packing of the sorbent, the physical stability of the 3-D structure, and the level of fouling of the adsorbent.

For a given mass of a solid, the adsorption is proportional to the surface area of the solid. This is generally maximized by using an adsorbent containing macro-, micro-, and nano-pores, as often described for activated carbons. High surface area activated carbon is the adsorbent typically used in high density adsorbent structures.

The packing density is also very important. The more adsorbent in a given volume, the more gas can be adsorbed and stored. One drawback of loose carbon packed into a storage tank is that it produces a high level of void space. Adsorbent material that is pressed into less space (known as densified) provides more adsorbent potential.

Loose carbon also has a disadvantage in that it can move and settle by vibration of an adsorption storage system during use, producing powdering and reduction of the adsorbent volume.

The US 4,999,330 reference solves the above limitations by forming a methyl cellulose or polyvinyl alcohol binder solvent solution, coating high surface area carbon particles with the binder solution, followed by removing the solvent and compressing the binder-coated particles to cause a bulk volume reduction of 50 to 200%. The '330 system suffers from its complexity and many steps. It also involves coating the entire activated carbon particles - which blocks many of the micropores - this fouling reducing the amount of surface area available for adsorption. Some of the pores can be pre-filled with solvent which can later be removed by heat to unblock many of the pores, however the net effect of a full coating is a large reduction in active surface area.

Carbon block filters are described in US 5,019,311, US 5,147,722, and US 5,331,037, uses an extrusion process to produce a porous article containing bound active particles, such as activated carbon, bound together by a thermoplastic binder. The carbon block filter is designed to remove contaminants from a fluid stream - such as in the purification of water. The polymer binder, which is generally a polyethylene, is used at a high level.

US 6,395,190 describes carbon filters and a method for making them having a 15 to 25 weight percent of a thermoplastic binder. The problem with polyethylene and other typical binders is that high loading percentages are required to adequately hold the adsorbent materials together. Poor fouling resistance is also a problem

Poly(vinylidene fluoride) as a binder for a porous block article, has been found to improve the carbon block article performance by providing effective binding at lower loading - which in turn opens more of the surface area of the active sorbent agent, and providing even greater efficiency.

Examples of such composite porous solid articles, as well as methods for producing them, are described for example in WO 2014/055473 and WO 2014/182861. These articles use polyvinylidene fluoride or polyamide binders, rather than the polyethylene binders previously used for carbon block filtration articles.

The document US2005/260396 A1 discloses another example of a gas storage article know from the prior art.

There is a need to improve the volume of gas that can be stored in a given volume of container space (v/vₒ), to improve the economics of this technology.

Surprisingly it has now been found that a high v/vₒ can be obtained in a gas storage article using low levels of polyvinylidene fluoride or polyamide binders with activated carbon or active carbon fibers, formed by an extrusion of compression molding process. The low levels of binder used have little negative effect on the ratio of activated adsorbent volume to container volume. Further, the low binder volume leads to improved permeability compared to lower density binders. Improved permeability increases the rate of adsorption and desorption of the stored gas from the porous solid storage article. In addition to providing a solid adsorption article having a high density packing, low level of binder volume, the solid porous adsorbent structure of the invention also show excellent resistance to fouling of the adsorbent surface area. Lastly, polyvinylidene fluoride or polyamide binders also provide excellent chemical resistance to the gas storage environment. Additionally, the high relative thermal index of these polymers is useful for the temperature range an adsorptive storage monolith would encounter during the product life cycle.

### SUMMARY OF THE INVENTION

The invention relates to a gas storage article as defined in claim 1.

The disclosure also relates to a sealed container containing the gas storage block article, having at least one valve opening for charging and discharging of a gas, the container capable of holding a pressurized gas.

The disclosure also relates to a gas storage container, holding the solid adsorbent and containing natural gas (methane).

### BREIF DESCRIPTION OF THE DRAWINGS

Figure 1: Is a cross sectional view of a solid gas storage article of the invention.
Figure 2: Is a cross-sectional view of a solid gas storage article of the invention extruded as a center rod and a hollow cylinder, and then nested together to form a similar sized concentric solid block of a diameter similar to Figure 1.

### DETAILED DESCRIPTION OF THE INVENTION

All percentages in a composition are weight percent, unless otherwise indicated, and all molecular weights are given as weight average molecular weight, unless stated otherwise. Combinations of different elements described herein are also considered as part of the invention.

"Interconnectivity", as used herein means that the active particles or fibers are permanently bonded together by the polymer binder particles without completely coating the active primary and secondary particles or functional particles or fibers. The binder adheres the sorbent at specific discrete points to produce an organized, porous structure. The porous structure allows a gas to pass through the interconnected particles or fibers, and the gas is exposed directly to the surface(s) of the sorbent particles or fibers, favoring the adsorption of the gas onto the adsorbent material. Since the polymer binder adheres to the adsorbent particles in only discrete points, less binder is used for full connectivity compared to a binder that is coated onto the adsorbent.

The invention relates to a solid porous gas storage article made of activated carbon or carbon fibres, the adsorbent material being bound together by small discrete thermoplastic polymer binder particles to provide interconnectivity. The solid porous article is generally present within a closed container, capable of holding a pressurized gas. The adsorbent and binder are combined under pressure to produce a dense porous solid gas-adsorbent structure.

### Binder

The polymer particles of the composite of the invention are thermoplastic polymer particles in the sub-micrometer range. The weight average particle size is less than 150 micrometer, preferably less than 10 micrometers, more preferably less than 1 micrometer, preferably less than 500 nm, preferably less than 400 nm, and more preferably less than 300 nm. The weight average particle size is generally at least 20 nm and preferably at least 50 nm.

Useful polymers are polyamides, and fluoropolymers, with homopolymers and copolymers of polyvinylidene fluoride being especially useful.

Preferably, the binder is a fluoropolymer. Useful fluoropolymers are thermoplastic homopolymers and copolymers having greater than 50 weight percent of fluoromonomer units by weight, preferably more than 65 weight percent, more preferably greater than 75 weight percent and most preferably greater than 90 weight percent of one or more fluoromonomers. Useful fluoromonomers for forming the fluoropolymer include but are not limited to: vinylidene fluoride (VDF or VF₂), tetrafluoroethylene (TFE), trifluoroethylene (TrFE), chlorotrifluoroethylene (CTFE), hexafluoropropene (HFP), vinyl fluoride (VF), hexafluoroisobutylene (HFIB), perfluorobutylethylene (PFBE), pentafluoropropene, 3,3,3-trifluoro-1-propene, 2-trifluoromethyl-3,3,3-trifluoropropene, fluorinated vinyl ethers including perfluoromethyl ether (PMVE), perfluoroethylvinyl ether (PEVE), perfluoropropylvinyl ether (PPVE), perfluorobutylvinyl ether (PBVE), longer chain perfluorinated vinyl ethers, fluorinated dioxoles, partially- or per-fluorinated alpha olefins of C₄ and higher, partially- or per-fluorinated cyclic alkenes of C₃ and higher, and combinations thereof.

Especially preferred fluoropolymers are polyvinylidene fluoride (PVDF) homopolymers, and copolymers, and polytetrafluoroethylene (PTFE) homopolymers and copolymers. While the invention applies to all thermoplastic polymers, and in particular all fluoropolymers and copolymers, and polyamides, vinylidene fluoride polymers will be used to illustrate the invention, and are the preferred polymer. One of ordinary skill in the art will understand and be able to apply the specific references to PVDF to these other thermoplastic polymers, which are considered to be within the realm of, and embodied in the invention.

In one embodiment, vinylidene fluoride copolymers are preferred, due to their lower crystallinity (or no crystallinity), making them more flexible than the semicrystalline PVDF homopolymers. Flexibility of the binder allows it to better withstand the manufacturing process, as well as increased pull-through strength and better adhesion properties. preferred copolymers include those containing at least 50 mole percent, preferably at least 75 mole %, more preferably at least 80 mole %, and even more preferably at least 85 mole % of vinylidene fluoride copolymerized with one or more comonomers selected from the group consisting of tetrafluoroethylene, trifluoroethylene, chlorotrifluoroethylene, hexafluoropropene, vinyl fluoride, pentafluoropropene, tetrafluoropropene, trifluoropropene, perfluoromethyl vinyl ether, perfluoropropyl vinyl ether and any other monomer that would readily copolymerize with vinylidene fluoride.

In one embodiment, up to 30%, preferably up to 25%, and more preferably up to 15 % by weight of hexafluoropropene (HFP) units and 70% or greater, preferably 75% or greater, more preferably 85% or greater by weight or more of VDF units are present in the vinylidene fluoride polymer. It is desired that the HFP units be distributed as homogeneously as possible to provide PVDF-HFP copolymer with excellent dimensional stability in the end-use environment.

The PVDF used in the invention is generally prepared by means known in the art, using aqueous free-radical emulsion polymerization - although suspension, solution and supercritical CO₂ polymerization processes may also be used. In a general emulsion polymerization process, a reactor is charged with deionized water, water-soluble surfactant capable of emulsifying the reactant mass during polymerization and optional paraffin wax antifoulant. The mixture is stirred and deoxygenated. A predetermined amount of chain transfer agent, CTA, is then introduced into the reactor, the reactor temperature raised to the desired level and vinylidene fluoride (and possibly one or more comonomers) are fed into the reactor. Once the initial charge of vinylidene fluoride is introduced and the pressure in the reactor has reached the desired level, an initiator emulsion or solution is introduced to start the polymerization reaction. The temperature of the reaction can vary depending on the characteristics of the initiator used and one of skill in the art will know how to do so. Typically the temperature will be from about 30° to 150°C, preferably from about 60° to 120°C. Once the desired amount of polymer has been reached in the reactor, the monomer feed will be stopped, but initiator feed is optionally continued to consume residual monomer. Residual gases (containing unreacted monomers) are vented and the latex recovered from the reactor.

The surfactant used in the polymerization can be any surfactant known in the art to be useful in PVDF emulsion polymerization, including perfluorinated, partially fluorinated, and non-fluorinated surfactants. Preferably the PVDF emulsion of the invention is fluorosurfactant-free, with no fluorosurfactants being used in any part of the polymerization. Non-fluorinated surfactants useful in the PVDF polymerization could be both ionic and non-ionic in nature including, but are not limited to, 3-allyloxy-2-hydroxy-1-propane sulfonic acid salt, polyvinylphosphonic acid, polyacrylic acids, polyvinyl sulfonic acid, and salts thereof, polyethylene glycol and/or polypropylene glycol and the block copolymers thereof, alkyl phosphonates and siloxane-based surfactants.

The PVDF polymerization results in a latex generally having a solids level of 10 to 60 percent by weight, preferably 10 to 50 percent.

The latex binder is generally reduced to a powder form by spray drying, coagulation, or other known process, to produce a dry powder.

Binder particles are generally from 5 to 700 nm in size, preferably from 50 to 500 nm, and more preferably from 100-300 nm as an average particle size. In some cases, polymer particles may agglomerate into 1 to 150 micrometer groupings, 3 -50 micrometers, 5-15 micrometers, and preferably 6-8 micrometer agglomerates, but it has been found that these agglomerates generally break into individual particles during processing to for an article. The binder particles are discreet particles, and remain as discrete particles in the formed solid porous adsorbent article. During processing into articles, the particles which start essentially spherical are deformed by pressure into thin oblong particles that bind adjoining adsorbent material together and provide interconnectivity.

It is important that as little binder is used as necessary to hold the absorbent materials together, as this allows more of the surface area to be exposed and be active in gas absorption. One advantage of PVDF binders is that they have a very high density of about 1.78 g/cc. Thus the low weight percent of binder needed represents an even lower volume percent.

The particle size of the binder plays a role in the lower weight% loadings needed to make a solid immobilized porous media block.

Further the rheology of PVDF resin based on the higher molecular weights of preferably 200,000 to 1,250,000 g/mole, and preferably 300.000-900,000 g/mole, assists in the binder not flowing into the carbon and fouling the high surface area of the activated carbon sorption media.

### Adsorbent

The adsorbents of the invention are those capable of adsorbing and desorbing specific gas molecules. In one important embodiment of the invention, activated carbon is used to adsorb natural gas (methane), however, other adsorbents with adsorption specificity for other gases are also contemplated by this invention. Activated carbon and carbon fibers are useful adsorbents of the invention. Activated carbon having a large level of surface area is especially preferred, as are nano carbon fibers, in order to maximize the surface area of the absorbent.

The primary active particles of the invention are generally in the size range of 0.1 to 3,000 micrometers, and preferably from 1 to 500 micrometers in diameter and fibers of 0.1 to 250 micrometers in diameter of essentially unlimited length to width ratio. Fibers are preferably chopped to no more than 5 mm in length. Adsorbent fibers or powders should have sufficient thermal conductivity to allow heating of the powder mixtures. In addition, in an extrusion process, the particles and fibers must have melting points sufficiently above the melting point of the fluoropolymer binder resin to prevent both substances from melting and producing a continuous melted phase rather than the usually desired multi phase system.

There are many sources of activated carbon and various techniques to differentiate the performance of each activated carbon per application. Sources of activated carbon include, but are not limited to, coconut shell, bitumen, coal, grass, organic polymers, hard wood, and soft wood. Each product has their own characteristics which can affect gas sorption and desorption performance. It is known that for gas sorption onto activated carbon it is dependent on the close proximity to surface area contact coupled with Van der Waal's forces to attract gas molecules and temporarily store them until desorption occurs. Key characteristics of the activated carbon which impacts the volume of gas sorption is the macro-, micro-, meso-porosity of the carbon surface area. The porosity is further characterized by the N₂ BET surface area curves. In general, a high N₂ BET surface area per mass volume is preferred, but not always practical for manufacturing. A key property related to manufacturing with solid state extrusion or compression molding methods is the apparent density, as measured by ASTM D2854, for material conveying and the hardness, as measured by ASTM D3802, when densifying.

It has been found that a hard carbon is preferred to economically manufacture densified block with known state of the art manufacturing. However the hard carbons having a low BET surface area are not preferred for gas sorption performance, but a soft carbon with high BET surface area is preferred. A soft carbon cannot be highly densified or manufactured at an economical rate using solid state extrusion or compression molding. Surprisingly, it has been discovered that unique blends of soft carbon and hard carbon can achieve both an economic manufacturing process and also achieve high performance gas sorption characteristics.

For the solid state extrusion process, a minimum of 5 percent by weight, preferably 10 weight percent, and preferably in the range of 10-60 weight percent of hard carbon is used to resist the pressure of the extruder and extrude a block structure. A higher level of the hard carbon, up to 100 weight percent will produce a wellformed solid state extruded block, however, the higher cost, and lower BET surface area of the hard carbon reduce performance and economics. Blocks prepared containing entirely soft carbons are possible, but the extrusion speed may be limited due to their compressibility. Blocks containing entirely soft carbons can be produced by a compression molding process.

Hard carbons are considered those with a ball pan hardness per ASTM D 3802 to be greater than 80% and soft carbons are considered when measured by the same method as being less than or equal to 80%. Low N₂ BET surface area is considered less than 1400 m²/g. while high N₂ BET surface area is considered greater than or equal to 1400 m²/g.

### Process

The binder and absorbent particles may be blended and processed by several methods. The binder particles are generally in a powder form, which can be dry blended with the sorbent materials. Solvent or aqueous blends may also be formed by known means. Preferably 0.3 to 30, preferably 0.5 to 25, and more preferably 1 to 16 weight percent of binder is used for each 84 to 99.5 weight percent of absorbent material. Preferably the level of binder is from 4 to 12 weight percent, and even more preferably from about 5 to 10 weight percent.

There are generally three methods to form a solid porous absorbent article from a homogeneous mixture of the adsorbent and binder: 1) dry powder homogeneous blends which are compression molded, 2) dry powder homogeneous blends which are extruded, and 3) solvent or aqueous blends which are cast and dried. Because a very dense solid absorbent article is desired, compression molding and extrusion processing at higher pressures can be used. The compression molding and extrusion processes are practiced in a manner that causes a softening of the polymer binder particles, but does not cause them to melt and flow to the point that they contact other polymer particles and form agglomerates or a continuous layer. To be effective in the contemplated end-uses, the polymer binder remains as discreet polymer particles that bind the adsorbent materials into an interconnected web, for good permeability. In a solvent system, individual polymer particles no longer exist, as they are dissolved and form a continuous coating over the adsorbent particles. The continuous coating reduces the amount of activated surface area available for adsorption on the particles, and can reduce their overall effectiveness.

The most economical solution for high quality and high output capacity is utilizing the extrusion process which makes uniform and highly packed immobilized porous media.

An advantage of the extrusion is that the absorbent density is fairly constant across the article, while a compression molded article tends to show a density gradient. It is increasingly difficult to have a uniform packing density gradient on a compression molded article especially as the aspect ratio (length/diameter ratio) increases. An advantage of a compression molded process is that a large variety of shapes are available.

The polymer binder particles can be formed into a porous block article in an extrusion process, such as that described in US 5,331,037. The polymer binder/adsorbent material composite of the invention is dry-blended, optionally with other additives, such as processing aids, and extruded, molded or formed into articles. Continuous extrusion under heat, pressure and shear can produce an infinite length 3-dimensional multi phase profile structure. In order to form the continuous web of forced-point bonding of binder to the adsorbent materials, a critical combination of applied pressure, temperature and shear is used. The composite blend is brought to a temperature above the softening temperature, but below the melting point, significant pressure applied to consolidate the materials, and enough shear to spread the binder and form a continuous web.

The extrusion process can produce a continuous block structure at any diameter and length desired. Lengths of 1 cm to hundreds of meters are possible with the right manufacturing equipment. The continuous solid block can then be cut into desired final lengths. Typical diameters of the solid blocks would be 15 cm or less, and more preferably 15 cm or less - though with the proper size die(s) larger diameter structures up to 1.5 meters and larger could be produced.

An alternative to a single, solid structure, is forming two or more structures - a solid rod, and one or more hollow block cylinders designed to nest together to form the larger structure. Once each annular or rod-shaped block component is formed, the components can be nested together to create a larger structure. This process can provide several advantages over the extrusion of a single large structure. The blocks with smaller cross-sectional diameter can be produced at a faster rate than producing a large, solid, single-pass block. The cooling profile can be better controlled for each of the smaller-cross sectional pieces. A further advantage of this concept may be reduced gas diffusion path lengths through the monoliths as the spacing between concentric blocks could serve as channels for rapid flow of gas.

### Properties

Articles formed by the invention are high density, porous, solid articles that maximize the volume of adsorbent to volume of the container ratio.

The articles formed are used within a closed container capable of holding a pressurized gas of up to 6.9 kPa (5000 psi). The adsorbent composite article should fit with a narrow tolerance inside the container, to maximize the amount of adsorbent per container volume. The container will have an inlet which will be used to fill the container with gas (methane) and will have a discharge end where the gas can leave the container. The adsorbent material does not settle or move during use, such as to power a vehicle, as it is interconnected by the binder particles. Gas is provided into the container under pressure, and is adsorbed and stored by the sorbent material. When the pressure is released, and the container open to a lower pressure environment, the gas will desorb from the adsorbent material, and be used in the application.

The gas storage article has an immobilized density greater than 1.1 times, and preferably greater than 1.5 times that of the apparent density of the sorption media. Densification permits more storage capacity per unit volume, thus increasing the possible v/vo in a given gas storage article.

A container holding the composite solid adsorbent can be used to power a vehicle. Alternatively it can be used for storage purposes to supply fuel to grill and stove burners, refrigerators, freezers, furnaces, generators, emergency equipment, etc.

### EXAMPLES

### EXAMPLE 1:

Dry powder blends are formed by dry blending 15 wt% of Kyblock^{™} FG-81 polyvinylidene fluoride homopolymer binder from Arkema and 85 wt% of Oxbow 8325C-AW/70 coconut shell activated carbon. The activated carbon is a nominally 80 x 325 mesh carbon, but also includes particles smaller than325 mesh (44 micrometers)and greater than 80 (177 micrometers) mesh with a particle size distribution designed to maximize the particle packing density.. The two dry, powdery materials are mixed until they are a homogeneous blend. The blend is then forced into a die which is heated to a minimum of 180°C under pressures greater than 689.5 kPa (100psi), forming a self-supporting, porous structure. The structure is then cooled to room temperature. The density of the activated carbon is initially 0.49g/cc and this density is increased to 0.71g/cc when combined with the binder and extruded. Under higher pacing pressure loadings the density can be increased even further.

### EXAMPLE 2:

The same activated carbon used in Example 1 is combined with 16 wt% of MICROTHENE FN510-00 (LyondellBassell) linear low density polyethylene (PE) binder. A block of the same density is prepared by a comparable solid state extrusion process.

### EXAMPLE 3:

A dry powder blend of 14 wt.% KYBLOCK^{®} FG-42 polyvinylidene fluoride copolymer and 86 wt.% of the same activated carbon in EXAMPLE 1 was prepared and filled into a 25.4 cm (10") tall steel annular mold with an outside diameter of 6.5 cm (2.5") and an inside diameter of 3.175 cm (1.25"). The mold containing powder was heated to 204.4 °C (400 °F) for one hour, and compressed with a hydraulic ram to achieve a block density of 0.7 g / cc.

### EXAMPLE 4:

A dry powder blend of 30 wt% Microthene FN510-00 and 70 wt% of the same activated carbon in EXAMPLE 1 was compression molded into a annular monolith of the same dimensions and density as in EXAMPLE 3. The higher level of Microthene FN510-00 binder was required to produce a block with adequate strength by compression molding.

The extruded samples produced in EXAMPLE 1 and EXAMPLE 2 were analyzed using the Brunauer-Emmett-Teller (BET) nitrogen adsorption method to characterize the usable surface area of the carbon sorption media. The pure carbon powder has a surface BET (m²/g) of 1150. The 15wt% Kyblock^{™} FG-81 has a 973 m²/g surface BET and the PE samples has 674 m²/g surface BET. After normalizing by weight percent, the Kyblock^{™} FG-81 is responsible for 0.37% fouling of the activated carbon surface. The PE is responsible for 30.17% fouling of the activated carbon surface. The Kyblock^{™} resin sample is greater than 80x more fouling resistant then the PE sample. The polyethylene binder has two drawbacks: 1) high occupied volume and 2) high level of fouling. The Kyblock^{™} FG-81 resin exhibits volume of binder occupied with in a 1 kg carbon block of 84.18 whereas the PE binder volume occupies 173.14 cc of space within a block of the same mass. The Kyblock^{™} binder has over 2x less occupied volume with in the composite monoliths.

The compression molded samples produced in EXAMPLE 3 and EXAMPLE 4 were also analyzed using the BET method. The monolith produced in EXAMPLE 3 had a BET surface area of 953 m²/g whereas the monolith from EXAMPLE 4 has BET surface area of 600 m²/g. When normalized for the different binder contents, the block in EXAMPLE 3 had a reduction of surface are of 3.6%, while the block in EXAMPLE 4 has a reduction of 24.5%. An activated carbon monolith of comparable strength can have an adsorptive surface area at least 150% that of a block produced with conventional binders.

### EXAMPLE 5:

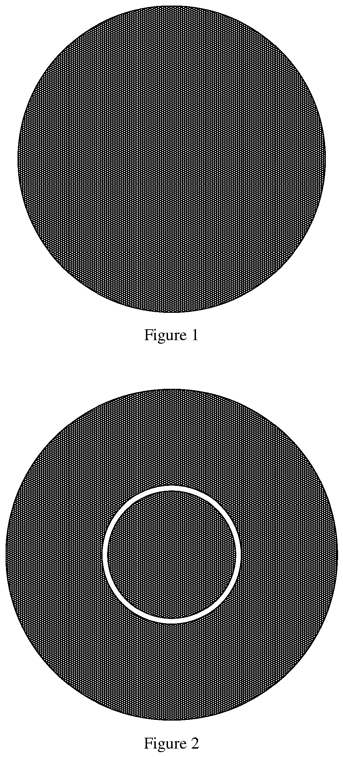

A solid extruded monolith 10 cm outside diameter was produced using the composition in EXAMPLE 1. The processing temperature was set at 250°C. Output speed was limited to 1 cm per minute due to the time required to raise the core of the monolith above the melting temperature of the Kyblock^{®} binder. Reference Fig. 1

### EXAMPLE 6:

An equivalent monolith to that produced in EXAMPLE 5 was produced with two extruders one producing an annulus with an outside diameter of 10 cm and an inside diameter of 5 cm, the other producing a solid rod with an outside diameter of 4.9 cm. Once formed, the rod was placed inside the annulus, forming concentric monoliths. The output rate of each of these extruders is approximately 5 cm / min, more than doubling the production rate of roughly the same volume of monolith. This concept could be extended with multiple nesting concentric blocks to produce an equivalent solid monolith of any desired diameter. A further advantage of this concept may be reduced gas diffusion path lengths through the monoliths as the spacing between concentric blocks could serve as channels for rapid flow of gas. Reference Fig. 2

### EXAMPLE 7:

An extruded annular monolith was produced by first preparing a dry powder blend containing 20 wt.% FX1184 (Jacobi Carbons) wood based carbon with surface area of 1400 m²/g ground and sieved to -120 mesh (125 micrometers), 70 wt. % of the 177 micrometer x 44 micrometer (80 × 325 mesh) carbon described in EXAMPLE 1, and 10 wt. % Kyblock^{®} FG-81 binder. A 4.8 cm (1.9") outside diameter by 3 cm (1.19") inside diameter annulus was extruded using a processing temperature of 230 °C at a rate of 2 cm/min. The density of the resulting block was 0.62 g/cc. BET surface area of the extruded block was 1176 m²/g.

### EXAMPLE 8:

A dry blend of 90 wt. % FX1184 (Jacobi Carbons) and 10 wt. % Kyblock^{®} FG-42 was prepared and an attempted to form into an identical annulus as in EXAMPLE 7. The frictional forces due to the extreme compressibility of the adsorbent material, it was impossible to produce a block via conventional solid state extrusion.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

## Claims

1. A gas storage article comprising a solid, dense, porous adsorbent media bound together by 0.3 to 30 weight percent of thermoplastic binder particles, wherein said binder particles have a discrete particle size of between 5 nm and 700 nm, wherein said adsorbent media is activated carbon or carbon fibers,
wherein the density of the immobilized article is greater than 1.1 times that of the apparent density of the sorption media and wherein said thermoplastic binder is selected from polyvinylidene fluoride homopolymer and copolymer, and polyamides,
wherein the particles forming said adsorbent media are in the size range of 0.1 to 3,000 micrometers in diameter, preferably from 1 to 500 micrometers in diameter and fibers in range of 0.1 to 250 micrometers in diameter, wherein the adsorbent material is bound together by discrete thermoplastic binder particles at discrete points providing interconnectivity.

2. The gas storage article of claim 1, further comprising a container capable of holding a pressurized gas at pressures up to 34474 Kilopascal (5000psi) wherein said solid, porous adsorbent media bound together by thermoplastic binder particles is present within the container.

3. The gas storage article of claim 1, wherein said binder particles have an average particle size of from 50 to 500 nm.

4. The gas storage article of claim 1, wherein said porous adsorbent media is bound together by 0.5 to 16 weight percent of thermoplastic binder.

5. The gas storage article of claim 1, wherein said article is formed by an extrusion process.

6. The gas storage article of claim 1, wherein said article is formed by a compression molding process.

7. The gas storage article of claim 1, wherein said binder makes up from 4 to 12 weight percent of said article, and said adsorbent makes up from 88 to 96 weight percent.

8. The gas storage article of claim 1, wherein said activated carbon has an average N₂ BET surface area greater than 2000 m²/g.

9. The gas storage article of claim 1, comprising an activated carbon media bound together by 0.3 to 30 weight percent of thermoplastic binder particles, wherein said article comprises two or more concentric nesting annuli produced by either solid state extrusion or compression molding.

10. The gas storage article of claim 1, comprising an activated carbon media bound together by 0.3 to 30 weight percent of thermoplastic binder particles, wherein said activated carbon is a blend comprising 10 to 95 weight percent of one or more activated soft carbons having a ball pan hardness of less than or equal to 85 percent, more preferred less than or equal to 80 percent, and 5 to 90 weight percent of one or more hard having a ball pan hardness activated carbon greater than 85 percent, more preferred greater than or equal to 90 percent (hard carbon).

11. The gas storage article of claim 10, wherein said blend contains less than 40wt %, and preferably less than 20 wt. percent, and most preferably less than 0.1wt percent of low N₂ BET surface area of less than 1400m²/g hard activated carbon and greater than 60 wt. percent, and preferably greater than 80 wt. %, and most preferably greater than 99.9 wt. percent of high N₂ BET surface area of greater than 1400 m²/g soft activated carbon.

## Patentansprüche

1. Gasspeichergegenstand, umfassend ein festes, dichtes, poröses Adsorptionsmittelmedium, das durch 0,3 bis 30 Gewichtsprozent an thermoplastischen Bindemittelpartikeln zusammengebunden ist, wobei die Bindemittelpartikel eine diskrete Partikelgröße von zwischen 5 nm und 700 nm aufweisen, wobei das Adsorptionsmittelmedium Aktivkohle oder Kohlenstofffasern ist,
wobei die Dichte des immobilisierten Gegenstands mehr als 1,1-mal jener der scheinbaren Dichte des Sorptionsmediums ist und wobei das thermoplastische Bindemittel ausgewählt ist aus Polyvinylidenfluorid-Homopolymer und -Copolymer und Polyamiden,
wobei die Partikel, die das Adsorptionsmedium bilden, in dem Größenbereich von 0,1 bis 3.000 Mikrometer im Durchmesser, vorzugsweise von 1 bis 500 Mikrometer im Durchmesser, und Fasern in dem Bereich von 0,1 bis 250 Mikrometer im Durchmesser liegen,
wobei das Adsorptionsmittelmaterial an diskreten Punkten, die Vernetzung bereitstellen, durch diskrete thermoplastische Bindemittelpartikel zusammengebunden ist.

2. Gasspeichergegenstand gemäß Anspruch 1, ferner umfassend einen Behälter, der fähig ist, ein druckbeaufschlagtes Gas bei Drucken von bis zu 34474 Kilopascal (5000 psi) zu halten, wobei das feste poröse Adsorptionsmittelmedium, das durch thermoplastische Bindemittelpartikel zusammengebunden ist, in dem Behälter vorhanden ist.

3. Gasspeichergegenstand gemäß Anspruch 1, wobei die Bindemittelpartikel eine mittlere Partikelgröße von 50 bis 500 nm aufweisen.

4. Gasspeichergegenstand gemäß Anspruch 1, wobei das poröse Adsorptionsmittelmedium durch 0,5 bis 16 Gewichtsprozent an thermoplastischem Bindemittel zusammengebunden ist.

5. Gasspeichergegenstand gemäß Anspruch 1, wobei der Gegenstand durch ein Extrusionsverfahren gebildet ist.

6. Gasspeichergegenstand gemäß Anspruch 1, wobei der Gegenstand durch ein Formpressverfahren gebildet ist.

7. Gasspeichergegenstand gemäß Anspruch 1, wobei das Bindemittel von 4 bis 12 Gewichtsprozent des Gegenstands bildet und das Adsorptionsmittel von 88 bis 96 Gewichtsprozent bildet.

8. Gasspeichergegenstand gemäß Anspruch 1, wobei die Aktivkohle eine mittlere N₂-BET-Oberfläche von größer als 2000 m²/g aufweist.

9. Gasspeichergegenstand gemäß Anspruch 1, umfassend ein Aktivkohlemedium, das durch 0,3 bis 30 Gewichtsprozent an thermoplastischen Bindemittelpartikeln zusammengebunden ist, wobei der Gegenstand zwei oder mehr konzentrische, ineinander geschachtelte Ringe aufweist, die durch entweder Feststoffextrusion oder Formpressen hergestellt sind.

10. Gasspeichergegenstand gemäß Anspruch 1, umfassend ein Aktivkohlemedium, das durch 0,3 bis 30 Gewichtsprozent an thermoplastischen Bindemittelpartikeln zusammengebunden ist, wobei die Aktivkohle ein Gemisch ist, das 10 bis 95 Gewichtsprozent an einer oder mehreren weichen Aktivkohlen mit einer Ball-Pan-Härte von kleiner als oder gleich 85 Prozent, bevorzugter kleiner als oder gleich 80 Prozent, und 5 bis 90 Gewichtsprozent an einer oder mehreren harten Aktivkohlen mit einer Ball-Pan-Härte von größer als 85 Prozent, bevorzugter größer als oder gleich 90 Prozent (Hartkohle), umfasst.

11. Gasspeichergegenstand gemäß Anspruch 10, wobei das Gemisch weniger als 40 Gew.-% und vorzugsweise weniger als 20 Gew.-% und höchst bevorzugt weniger als 0,1 Gew.-% an harter Aktivkohle mit einer niedrigen N₂-BET-Oberfläche von kleiner als 1400 m²/g und mehr als 60 Gew.-% und vorzugsweise mehr als 80 Gew.-% und höchst bevorzugt mehr als 99,9 Gew.-% an weicher Aktivkohle mit einer hohen N₂-BET-Oberfläche von größer als 1400 m²/g enthält.

## Revendications

1. Article de stockage de gaz comprenant un support adsorbant poreux, dense, solide lié ensemble par 0,3 à 30 pour cent en poids de particules de liant thermoplastique, lesdites particules de liant possédant une taille de particule discrète comprise entre 5 nm et 700 nm, ledit support adsorbant étant un carbone activé ou des fibres de carbone,
la densité de l'article immobilisé étant supérieure à 1,1 fois la densité apparente du support de sorption et ledit liant thermoplastique étant choisi parmi un homopolymère et un copolymère de poly(fluorure de vinylidène), et des polyamides,
les particules formant ledit support adsorbant étant dans la plage de taille de 0,1 à 3 000 micromètres de diamètre, préférablement de 1 à 500 micromètres de diamètre et les fibres étant dans une plage de 0,1 à 250 micromètres de diamètre,
le matériau adsorbant étant lié ensemble par des particules de liant thermoplastique discrètes à des points discrets fournissant une interconnectivité.

2. Article de stockage de gaz selon la revendication 1, comprenant en outre un récipient capable de maintenir un gaz pressurisé à des pressions jusqu'à 34 474 kilopascals (5 000 psi), ledit support adsorbant poreux, solide lié ensemble par des particules de liant thermoplastique étant présent dans le récipient.

3. Article de stockage de gaz selon la revendication 1, lesdites particules de liant possédant une taille moyenne de particule allant de 50 à 500 nm.

4. Article de stockage de gaz selon la revendication 1, ledit support adsorbant poreux étant lié ensemble par 0,5 à 16 pour cent en poids de liant thermoplastique.

5. Article de stockage de gaz selon la revendication 1, ledit article étant formé par un processus d'extrusion.

6. Article de stockage de gaz selon la revendication 1, ledit article étant formé par un processus de moulage par compression.

7. Article de stockage de gaz selon la revendication 1, ledit liant représentant de 4 à 12 pour cent en poids dudit article, et ledit adsorbant représentant de 88 à 96 pour cent en poids.

8. Article de stockage de gaz selon la revendication 1, ledit carbone activé possédant une superficie BET de N₂ supérieure à 2 000 m²/g.

9. Article de stockage de gaz selon la revendication 1, comprenant un support de carbone activé lié ensemble par 0,3 à 30 pour cent en poids de particules de liant thermoplastique, ledit article comprenant deux anneaux concentriques emboîtés ou plus produits soit par extrusion à l'état solide, soit par moulage par compression à l'état solide.

10. Article de stockage de gaz selon la revendication 1, comprenant un support de carbone activé lié ensemble par 0,3 à 30 pour cent en poids de particules de liant thermoplastique, ledit carbone activé étant un mélange comprenant 10 à 95 pour cent en poids d'un ou plusieurs carbones tendres activés possédant une dureté au plateau à bille inférieure ou égale à 85 pour cent, de manière plus préférée inférieure ou égale à 80 pour cent, et 5 à 90 pour cent en poids d'un ou plusieurs carbones activés durs possédant une dureté au plateau à bille supérieure à 85 pour cent, de manière plus préférée supérieure ou égale à 90 pour cent (carbone dur).

11. Article de stockage de gaz selon la revendication 10, ledit mélange contenant moins de 40 % en poids, et préférablement moins de 20 pour cent en poids, et le plus préférablement moins de 0,1 pour cent en poids de carbone activé dur à superficie BET de N₂ faible inférieure à 1 400 m²/g et plus de 60 pour cent en poids, et préférablement plus de 80 % en poids, et le plus préférablement plus de 99,9 pour cent en poids de carbone activé tendre à superficie BET de N₂ élevée supérieure à 1 400 m²/g.
